# EUROPÄISCHE PATENTSCHRIFT

(11) **EP 0 769 643 B1**
(45) Veröffentlichungstag und Bekanntmachung des Hinweises auf die Patenterteilung: **20.01.1999**
(21) Anmeldenummer: 96116628.7
(22) Anmeldetag: 17.10.1996
(51) Int. Cl.: F16K 11/085, F24D 19/10

(54) **Mischventil**
Mixing valve
Vanne mitigeuse

(30) Priorität: 20.10.1995 DE 19539046
(43) Veröffentlichungstag der Anmeldung: 23.04.1997
(73) Patentinhaber: CENTRA-BÜRKLE GMBH, D-71101 Schönaich (DE)
(72) Erfinder: Müller, Wolfgang, 71101 Schönaich (DE); Kluth, Hans-Ulrich, 71093 Weil im Schönbuch (DE)
(74) Vertreter: Herzbach, Dieter, Dipl.-Ing.

(56) Entgegenhaltungen:
- CH-A- 259 374
- CH-A- 328 844
- DE-A- 3 030 565
- DE-A- 3 713 185
- DE-C- 821 367
- GB-A- 895 906
- GB-A- 921 912
- NL-C- 91 850
- US-A- 1 593 795
- US-A- 2 129 231
- US-A- 2 766 771

## Beschreibung

Die vorliegende Erfindung bezieht sich auf ein Mischventil nach dem Gattungsbegriff des Patentanspruches 1.

Bei derartigen Mischventilen, die als Drei- oder Vier-Wege-Mischventile ausgeführt sein können, steuert im allgemeinen ein Drehschieber in einem Ventilgehäuse den Durchfluß eines Heizungsmediums zwischen einem Kesselvorlauf, einem Heizungsvorlauf, einem Heizungsrücklauf und einem Kesselrücklauf.

So ist beispielsweise aus der DE 31 21 055 A1 ein Dreiwege- oder Vierwege-Mischventil für Heizungsanlagen bekannt, bei dem ein Gehäuse mit drei oder vier Anschlüssen einen Drehschieber aufnimmt, wobei der Drehschieber die Verbindung zwischen den Anschlüssen steuert. Ferner ist es aus dieser Veröffentlichung bekannt, den Drehschieber mit zwei hintereinander in zwei Ebenen angeordneten Küken zu versehen, wobei das eine Küken das Steuerküken und das andere Küken ein Bypassküken ist.

Ferner zeigt die DE 25 40 435 A1 ein Vierwege-Mischventil für Heizungsanlagen mit einem Gehäuse zur Aufnahme eines Drehschiebers und mit vier Anschlüssen an dem Gehäuse, wobei der Drehschieber die Verbindung zwischen den Anschlüssen steuert. Der Drehschieber besteht dort aus zwei hintereinander in zwei Ebenen angeordneten Steuerflächen, welche die gleichzeitige Steuerung des Zuflusses und des Abflusses zum Heizungskörper und des Durchflusses durch einen Bypass ermöglichen.

Die CH-PS 259 374 zeigt ein Vierwege-Mischventil für Heizungsanlagen mit einem Gehäuse zur Aufnahme eines Drehschiebers und mit vier Anschlüssen an dem Gehäuse, wobei der Drehschieber die Verbindung zwischen den Anschlüssen steuert. Aus dieser Veröffentlichung ist es ferner bekannt, den Drehschieber aus zwei hintereinander in zwei Ebenen angeordneten Steuerküken aufzubauen. Letztlich zeigt die US-PS 1,593.795 ein Schaltventil mit den Merkmalen des Mischventils gemäß dem Oberbegriff des 1 Anspruchs. Dieses Ventil weist einen Drehschieber mit zwei hintereinander in zwei Ebenen angeordnete Steuerküken auf, die ein an einem Eingang zugeführtes Fluid wahlweise zu einem von zwei Ausgängen steuern die an die Ober- und Unterseite eines Kolbens angeschlossen sind. Eine Anschluß-Vertauschbarkeit, d.h. ein wahlweiser Rechts- oder Linksanschluß des Kesselvorlaufs ist bei derartigen Mischventilen im allgemeinen nicht gegeben, in der Praxis aber erwünscht.

Es ist daher die Aufgabe der vorliegenden Erfindung, ein Mischventil anzugeben, das in einfacher Weise einen wahlweisen Rechts- oder Linksanschluß des Kesselvorlaufs gestattet.

Die Lösung dieser Aufgabe gelingt gemaß den kennzeichnenden Merkmalen der unabhängigen Ansprüchs. Weitere vorteilhafte Ausgestaltungen des erfindungsgemäßen Mischventils sind den abhängigen Ansprüchen entnehmbar.

Anhand eines in den Figuren der beiliegenden Zeichnung dargestellten Ausführungsbeispieles sei im folgenden das erfindungsgemäße Mischventil näher beschrieben. Es zeigen:
- Figur 1: eine Seitenansicht des erfindungsgemäßen Mischventils;
- Figur 2: einen Längsschnitt durch das Mischventil gemäß Figur 1;

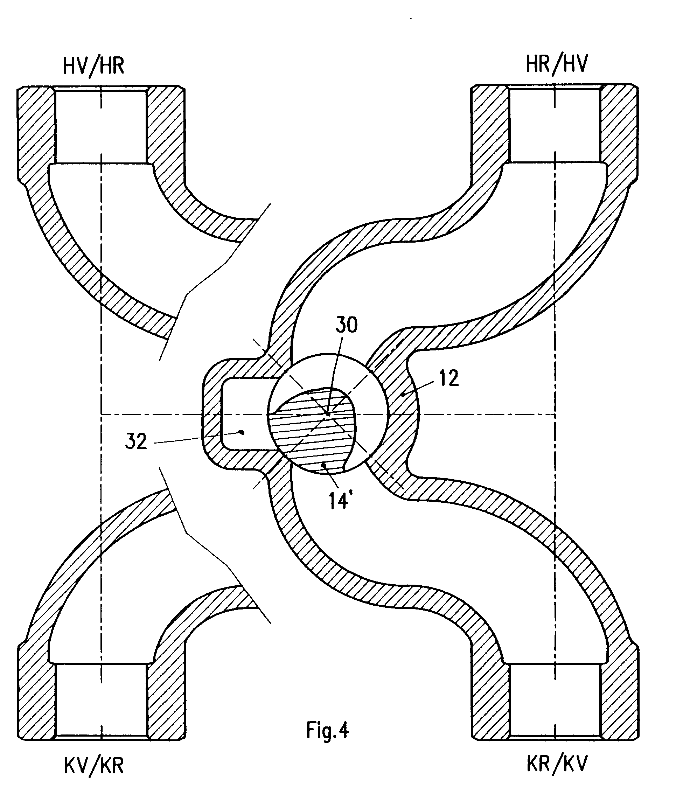

- Figuren 3 und 4: Querschnitte durch das Mischventil gemäß Figur 1 in verschiedenen Ebenen; und
- Figur 5: hydraulische Ersatzschaltbilder des erfindungsgemäßen Mischventils.

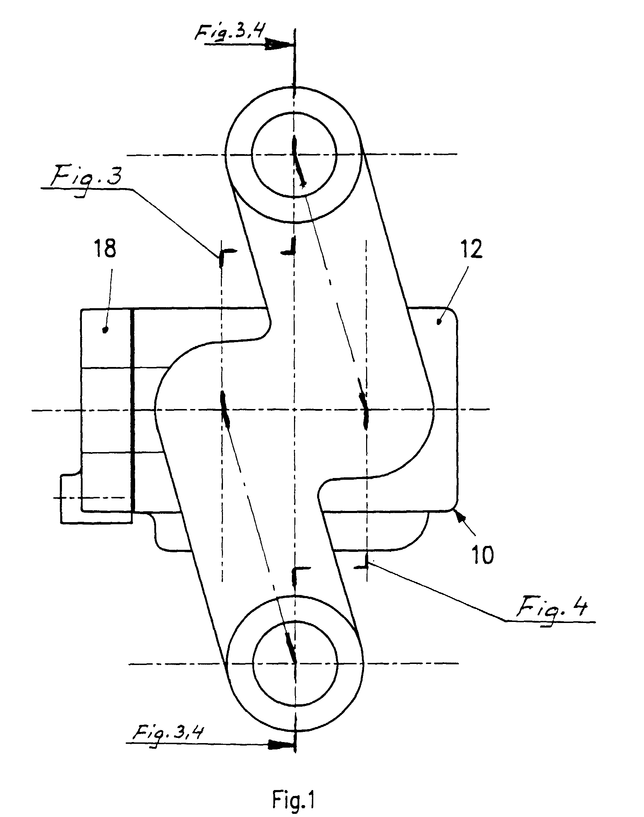

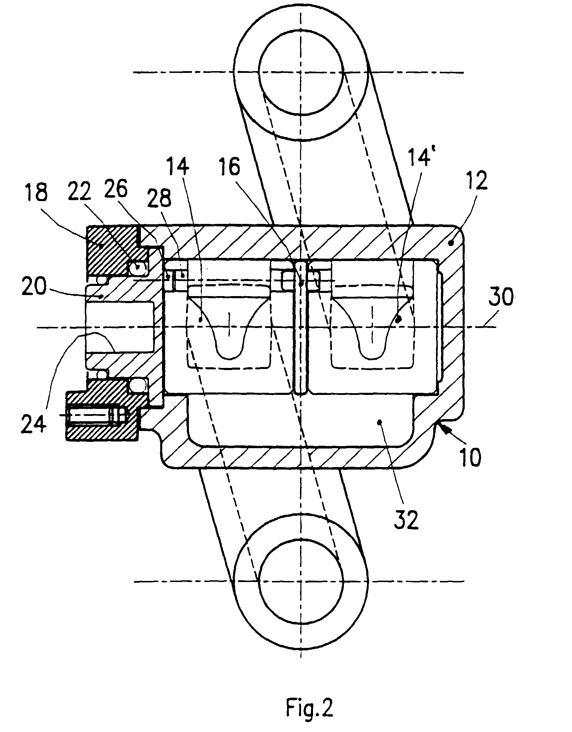

Gemäß den Figuren 1 und 2 umfaßt das Mischventil 10 ein Ventilgehäuse 12, in dem zwei Steuerküken 14, 14' nebeneinander in zwei Ebenen gelagert sind. Beide Steuerküken 14, 14' sind über einen Kupplungsstift 16 miteinander gekoppelt und werden somit synchron bewegt. Die beiden Steuerküken 14, 14' könnten im Prinzip auch einstückig ausgebildet sein und einen einzigen Drehschieber bilden. Mit dein Ventilgehäuse 12 ist ein Ventiloberteil 18 in nicht näher dargestellter Weise verbunden. In diesem Ventiloberteil ist ein Mitnehmer 20 durch einen O-Ring 22 abgedichtet gelagert, und ein nicht dargestellter Ventilantrieb greift in eine Vierkant-Ausnehmung 24 des Mitnehmers 20 ein. Der Mitnehmer 20 greift mit einem Zapfen 26 in eine Ausnehmung 28 in dem Steuerküken 14 ein, so daß er bei seiner Drehung durch den Antrieb beide Steuerküken 14, 14' um die Achse 30 dreht. Zu beiden Steuerküken 14, 14' führen jeweils zwei Anschlüsse, von denen in den Figuren 1 und 2 jeweils nur einer sichtbar ist. Die Mischkammern beider Steuerküken 14, 14' stehen über einen Beimischkanal 32. der parallel zur Achse 30 verläuft und beide Ebenen miteinander verbindet, in Verbindung.

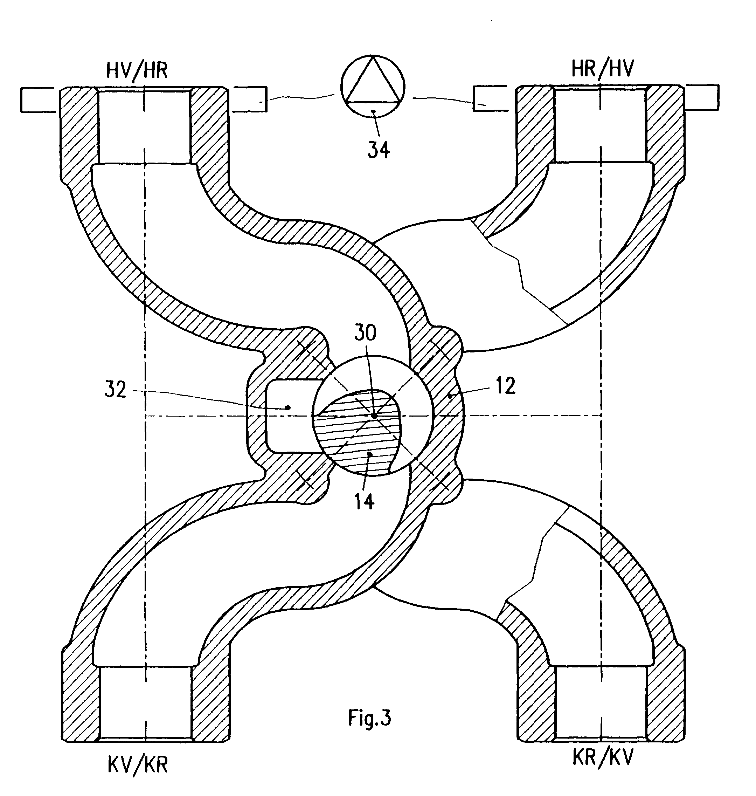

Gemäß Figur 3 steuert das Steuerküken 14 in der ersten Ebene des Mischventils 10 den Durchfluß des Fluids von einem Eingang zu einem Ausgang, wobei der Eingang wahlweise der Kesselvorlauf oder der Kesselrücklauf und der Ausgang wahlweise der Heizungsvorlauf oder der Heizungsrücklauf sein kann. Alle Anschlüsse zusammen bilden eine H-förmige Anordnung. Das Steuerküken 14 kann den Ein- oder Ausgang verschließen oder in einer Zwischenstellung den Zutritt zu dem Beimischkanal 32 öffnen. Die beiden anderen Anschlüsse, nämlich der Kesselrücklauf bzw. Kessel vorlauf und der Heizungsrücklauf bzw. der Heizungsvorlauf liegen in der gleichen Ebene, führen aber zu dem Steuerküken 14' in der anderen Ebene.

Andererseits steuert gemäß Figur das Steuerküken 14' in der zweiten Ebene des Mischventils 10 den Durchfluß des Fluids von einem Eingang zu einem Ausgang, wobei der Eingang wahlweise der Kesselrücklauf oder der Kessel vorlauf und der Ausgang wahlweise der Heizungsrücklauf oder der Heizungsvorlauf sein kann. Auch hier kann das Steuerküken 14' den Ein- oder Ausgang verschließen oder in einer Zwischenstellung den Zutritt zu dem Beimischkanal 32 öffnen.

Eine Umwälzpumpe 34 ist in bekannter Weise in dem Kreis zwischen Heizungsvorlauf und Heizungsrücklauf angeordnet, wie dies in Figur 3 angedeutet ist.

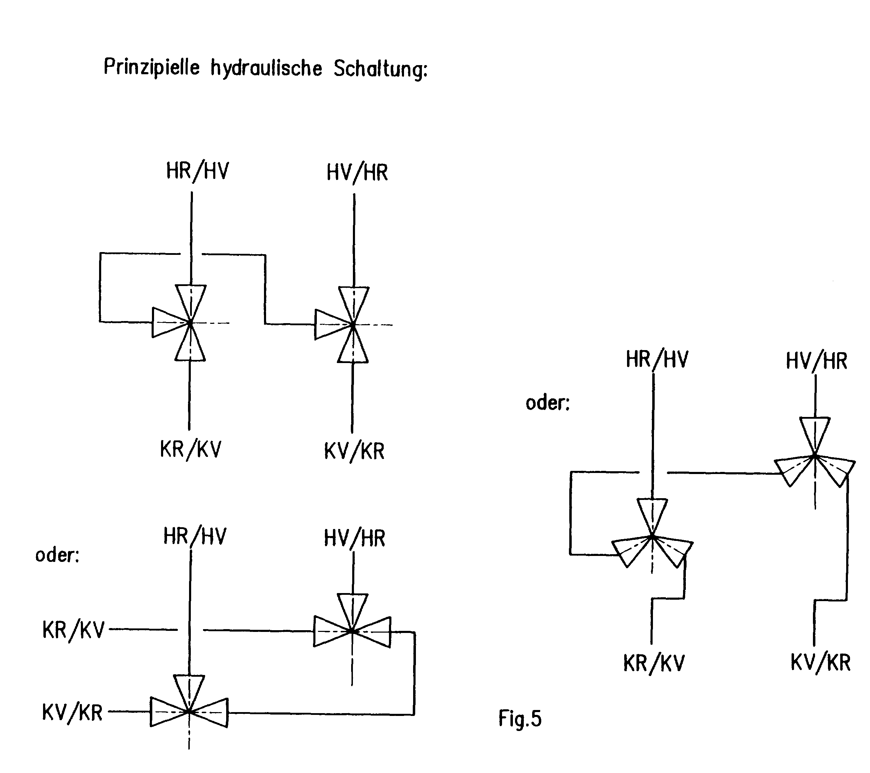

Die Verbindung der beiden Ebenen über den Beimischkanal 32 könnte prinzipiell auch über eine Leitung erfolgen. die zwei Drei-Wege-Ventile miteinander verbindet. wodurch sich die hydraulischen Schaltbilder gemäß Figur 5 ergeben.

## Patentansprüche

1. Mischventil (10) mit einem Gehäuse (12) zur Aufnahme eines Drehschiebers und mit vier zu dem Drehschieber führenden Anschlüssen, wobei der Drehschieber die Verbindung zwischen den Anschlüssen steuert und aus zwei hintereinander in zwei Ebenen angeordneten Steuerküken (14, 14') besteht, wobei jedem Steuerküken jeweils paarweise zwei Anschlüsse (KV/KR, HV/HR; KR/KV, HR/HV) zugeordnet sind. **da durch gekennzeichnet** , daß die Anschlüsse (KV/KR, HV/HR; KR/KV, HR/HV) H-förming angeordnet sind, in einer Ebene liegen, und an dem Gehäuse (12) getrennt zugänglich sind, daß die Drehachse (30) der Steuerküken (14, 14') senkrecht zu dieser Ebene liegt, daß die beiden Anschlüsse auf der Kopfseite bzw. auf der Fußseite der H-förmigen-Anordnung zu Steuerküken (14, 14') in jeweils unterschiedlichen Ebenen geführt sind und daß ein parallel zur Drehachse (30) der Steuerküken verlaufender Beimischkanal (32) in dem Gehäuse (12) angeordnet ist, der beide Ebenen verbindet und dessen Zu- und Austritt ebenfalls durch die Steuerküken steuerbar ist.

2. Mischventil nach Anspruch 1, **dadurch gekennzeihnet,** daß die beiden Steuerküken (14, 14') gleich ausgebildet und über einen Mitnehmer (16) miteinander gekoppelt sind.

3. Mischventil nach Anspruch 1 oder 2,**dadurch gekennzeichnet,** daß die beidein Steuerküken (14, 14') einstückig ausgebildet sind.

4. Mischventil nach Anspruch 2 oder 3, **dadurch gekennzeichnet,** daß die Steuerküken (14, 14') über einen Motormitnehmer (20) angetrieben sind, der iiber wenigstens einen Zapfen (26) mit den Steuerküken (14, 14') in Antriebsverhindung steht.

## Claims

1. Mixing valve (10) comprising a housing (12) for receiving a rotary slide and comprising four terminals leading to the rotary slide. whereat the rotary slide is controlling the connection between the terminals and is consisting of two control plugs (14,14') arranged in two planes one behind the other. whereat to each control plug two terminals (KV/KR,HV/HR;KR/KV,HR/HV) each are related in pairs. **characterized in that** the terminals (KV/KR,HV/HR;KR/KV,HR/HV) are arranged in a H-configuration, that they are arranged in one plane and that they are accessible separately at that housing (12), that the rotary axis (30) of said control plugs (14,14') extends normal to said plane, that both terminals at the head side and the bottom side of the H-configuration each are guided into different planes and that an adding channel (32) extending parallel to the rotary axis (30) is arranged within the housing (12) which connects both planes with the entrance and exit of said channel being also controlled by the control plugs.

2. Mixing valve according to claim 1, **characterized in that** both control plugs (14,14') are shaped in the same way and are coupled with each other by a cam (16).

3. Mixing valve according to claim 1 or 2, **characterized in that** both control plugs (14,14')are formed in one piece.

4. Mixing valve according to claim 2 or 3, **charaterized in that** the control plugs (14,14') are driven by a motor cam (20) which by means of at least one pin (26) is in driving connection with the control plugs (14,14').

## Revendications

1. Mitigeur (10) comportant un boîtier (12) servant à loger un tiroir rotatif, et quatre raccords aboutissant au tiroir rotatif, le tiroir rotatif commandant la liaison entre les raccords et étant constitué de deux boisseaux de commande (14, 14') disposés l'un derrière l'autre dans deux plans et à chacun desquels sont associés, respectivement par paires, deux raccords (KV/KR, HV/HR ; KR/KV, HR/HV), caractérisé en ce que les raccords (KV/KR, HV/HR, KR/KV, HR/HV) sont disposés en forme de H, sont situés dans un plan et sont accessibles séparément au niveau du boîtier (12), que l'axe de rotation (30) des boisseaux de commande (14, 14') est perpendiculaire à ce plan, que les deux raccords sont guidés dans des plans respectivement différents sur le côté de tête et sur le côté de base du dispositif en forme de H par rapport aux boisseaux de commande (14, 14') et que dans le boîtier (12) est disposé un canal de mélange (32), qui est parallèle à l'axe de rotation (30) des boisseaux de commande et relie les deux plans et dont l'entrée et la sortie peuvent être également commandées par les boisseaux de commande.

2. Mitigeur selon la revendication 1, caractérisé en ce que les deux boisseaux de commande (14, 14') sont agencés de la même manière et sont couplés entre eux par l'intermédiaire d'un organe d'entraînement (16).

3. Mitigeur selon la revendication 1 ou 2, caractérisé en ce que les deux boisseaux de commande (14, 14') sont agencés d'un seul tenant.

4. Mitigeur selon la revendication 2 ou 3, caractérisé en ce que les boisseaux de commande (14, 14') sont entraînés par l'intermédiaire d'un organe d'entraînement à moteur (20), qui est relié selon une liaison motrice, au moyen d'un téton (26), aux boisseaux de commande (14, 14').
